# FASCICULE DE BREVET EUROPEEN

(11) **EP 1 539 520 B1**
(45) Date de publication et mention de la délivrance du brevet: **29.11.2006**
(21) Numéro de dépôt: 03769276.1
(22) Date de dépôt: 12.09.2003
(51) Int. Cl.: B60K 15/04

(54) **SYSTEME DE SECURITE POUR RESERVOIR A CARBURANT LIQUIDE**
SICHERHEITSSYSTEM FÜR FLÜSSIGBRENNSTOFFTANK
SAFETY SYSTEM FOR LIQUID FUEL TANK

(30) Priorité: 13.09.2002 FR 0211466
(43) Date de publication de la demande: 15.06.2005
(73) Titulaire: Inergy Automotive Systems Research (SA), 1120 Bruxelles (BE)
(72) Inventeur: GANACHAUD, Patrick, F-53000 Laval (FR); COVET, Jacques, F-53200 Gennes S/Glaize (FR)
(74) Mandataire: Jacques, Philippe
(86) Numéro de dépôt international: PCT/EP2003/010191
(87) Numéro de publication internationale: WO 2004/024487

(56) Documents cités:
- EP-A- 0 026 727
- EP-A- 0 921 026
- FR-A- 952 137
- FR-A- 2 458 418
- US-A- 2 548 734
- US-A- 5 183 087
- US-A- 5 740 842

## Description

La présente invention concerne un système de sécurité pour réservoir à carburant liquide.

De nombreux systèmes de sécurité relatifs à des réservoirs à carburant ont été décrits et s'adressent généralement à la résolution des problèmes liés au dégazage du réservoir pendant son remplissage, ainsi que sa mise à l'air en période normale de repos et de fonctionnement du moteur consommant ce carburant. A ces problèmes s'ajoute la nécessité de plus en plus impérieuse, en vue du respect de l'environnement, de récupérer les vapeurs dégagées lors des opérations citées ci-dessus en évitant au maximum les fuites vers l'atmosphère.

Il est connu par le brevet US-A-5,183,087 de dégazer un réservoir à carburant muni d'une tubulure de remplissage, d'un clapet de dégazage et de mise à l'air relié à un canister et d'une canalisation de faible diamètre reliant la partie supérieure du réservoir à un guide situé à l'entrée de la tubulure de remplissage et qui a pour fonction de commander le déclenchement de la fermeture de l'amenée de carburant par le pistolet. Ce guide est muni d'un dispositif d'étanchéité et la canalisation aboutit en aval du dispositif d'étanchéité. Dans ce système, le dégazage s'effectue exclusivement par le clapet relié au canister. Ce clapet est normalement fermé en position de repos et ne s'ouvre que sous l'effet d'une certaine pression dans le réservoir. Un système selon le préambule de la revendication 1 est décrit dans le document US 5740842 A.

Les systèmes connus présentent toutefois un certain nombre de désavantages:
- maîtrise difficile de la surpression dans le réservoir occasionnant des débordements et des projections intempestives au remplissage,
- système mal adapté à la récupération des vapeurs par le pistolet,
- impossibilité de déclencher la fermeture de l'alimentation en carburant par le pistolet pour un sur-remplissage inférieur à 0,2 l.

L'invention a pour but de remédier aux inconvénients des systèmes connus et de fournir un système qui permette :
- le remplissage sans pression dans le réservoir,
- la suppression des débordements et projections de carburant,
- la standardisation du haut de la tubulure de remplissage pour les différentes variantes de carburant et de mode de récupération des vapeurs,
- l'encombrement réduit du système,
- la suppression des clapets anti-refoulement et d'interdiction de sur-remplissage,
- la suppression de la génération d'une bouffée de vapeurs lors de la mise à l'air via l'élimination des systèmes de valves à bille dense,
- le maintien d'un coût bas du même ordre de grandeur ou inférieur à celui des systèmes classiques existant à l'heure actuelle.

A cet effet l'invention concerne un système de sécurité pour réservoir à carburant liquide, selon la revendication 1.

L'invention s'adresse à un système de sécurité pour un réservoir à carburant, c'est-à-dire un système qui permette le stockage et la manipulation du carburant de manière sûre pour l'utilisateur comme pour l'environnement. Un tel système met l'utilisateur à l'abri de toute situation hasardeuse, en particulier les risques d'explosion, d'implosion, de combustion ou de pollution quelconques, tout en maintenant l'environnement extérieur exempt de toute fuite de liquide ou émanation de gaz indésirables.

Le réservoir auquel s'adresse le système selon l'invention est constitué d'une enceinte fermée, de formes diverses, généralement étanche vis-à-vis de l'extérieur et peut être équipé de divers accessoires internes ou traversant la paroi de l'enceinte. Le réservoir peut contenir tout type de carburant liquide. En particulier, il peut contenir du carburant pour l'alimentation de moteurs thermiques automobiles et, en particulier, l'essence et le gasoil. Par extension, il peut aussi contenir tout liquide organique qui serait utilisé comme carburant et/ou comburant pour l'alimentation d'une pile à combustible destinée à générer un courant électrique en vue d'alimenter un ou plusieurs moteurs consommant ce type d'énergie.

Le système selon l'invention peut être réalisé en tout matériau approprié utilisé pour réaliser un système à carburant liquide. Des exemples de ces matériaux sont les métaux divers et les matières plastiques. Un système selon l'invention peut aussi comprendre plus d'un matériau particulier.

De préférence, le système de sécurité selon l'invention est réalisé en matière plastique. Par matière plastique on entend désigner toute matière comprenant au moins un polymère en résine de synthèse.

Tous les types de matière plastique peuvent convenir. Des matières plastiques convenant bien appartiennent à la catégorie des matières thermoplastiques.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés; les copolymères à blocs et les copolymères greffés.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyhalogénures de vinyle, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles, les fibres de verre et les fibres polymériques. Il est également possible d'utiliser des structures multicouches constituées de couches empilées et solidaires comprenant au moins un des polymères ou copolymères décrits *supra.*

Les polyhalogénures de vinyle et les polyoléfines sont généralement préférés.

Un polymère souvent employé est le polyéthylène. D'excellents résultats ont été obtenus avec du polyéthylène haute densité (PEHD).

La tubulure de remplissage du système selon l'invention a pour fonction de permettre le remplissage du réservoir, sans fuites de liquide, à partir d'un point qui ne se trouve pas à proximité immédiate du réservoir. Il est par exemple courant, dans le cas d'automobiles personnelles, que le réservoir à carburant soit situé à un endroit peu accessible et relié par une tubulure de remplissage à un orifice d'entrée, obturable par un bouchon, situé à un endroit aisément accessible de la carrosserie du véhicule.

Selon l'invention, la tubulure de remplissage est munie, à son orifice d'entrée, d'un guide pour pistolet muni d'un dispositif d'étanchéité vis-à-vis de l'environnement extérieur.

Le pistolet est celui qui équipe les pompes des stations-service destinées à l'approvisionnement en carburant, notamment des véhicules automobiles.

Selon l'invention, le guide est muni d'un dispositif d'étanchéité vis-à-vis de l'environnement extérieur. Ce dispositif d'étanchéité est capable d'isoler l'atmosphère intérieure du réservoir et celle de la tubulure de remplissage de l'atmosphère ambiante, même lorsque le pistolet est introduit dans la tubulure et traverse ledit guide. Par le terme "isoler", on entend désigner ici : n'admettre qu'une fuite légère lors de l'utilisation du réservoir Le niveau admissible de fuite est réglé lors du montage du dispositif d'étanchéité pour que, sous une pression de test de 40 mbar par rapport à la pression atmosphérique, la fuite ne dépasse pas 20 l/heure et, de préférence, pas 12 l/heure.

L'opération de remplissage d'un réservoir avec un carburant liquide s'accompagne, nécessairement d'une augmentation de la pression interne au réservoir. Lorsque celui-ci comporte un circuit de dégazage, la légère surpression causée par le liquide nouvellement introduit dans le réservoir tend à s'annuler grâce à l'échappement d'un volume semblable du gaz qui occupait le réservoir. Dans le cas de liquides volatils, le gaz qui s'échappe sera un mélange plus ou moins homogène du gaz présent dans le réservoir avant le remplissage et de vapeurs provenant de la vaporisation partielle du liquide introduit.

Par ailleurs, en utilisation normale du réservoir, le volume de carburant liquide diminue à mesure que des prélèvements plus ou moins réguliers et/ou continus sont effectués. Il est donc nécessaire de prévoir et d'équiper les réservoirs de dispositifs permettant l'entrée d'air afin de compenser la perte de liquide au cours du fonctionnement et d'éviter ainsi la mise en dépression du réservoir et les dangers inhérents à cette situation.

Pour tendre à se prémunir contre de tels risques, le rôle du clapet monté sur le réservoir, conformes l'un et l'autre au système selon l'invention est celui d'un clapet de sécurité, c'est-à-dire capable d'assurer la mise à l'air du réservoir ou, en d'autres termes, capable de permettre son ouverture programmée afin de réaliser les deux fonctions distinctes de dégazage lors du remplissage du réservoir et de ventilation de celui-ci lors de l'utilisation normale pendant laquelle le carburant qu'il contient est soit consommé, soit abandonné dans le réservoir pendant une certaine période de stockage.

Le système selon l'invention comprend aussi une canalisation de respiration des vapeurs et de fixation du niveau maximum du carburant liquide dans le réservoir lors du remplissage. Selon l'invention, cette canalisation est située complètement à l'intérieur du volume délimité par le réservoir et la tubulure de remplissage.

La canalisation de respiration et de fixation du niveau maximum relie la partie haute du réservoir à la partie supérieure de la tubulure de remplissage et est capable d'évacuer la plus grande partie (et de préférence, la totalité) du volume des gaz présents dans le réservoir, c'est-à-dire possède un diamètre suffisant pour permettre l'échappement des gaz sans créer de surpression substantielle à l'intérieur du réservoir.

Elle débouche à une de ses extrémités dans la partie haute du réservoir à un niveau correspondant au niveau supérieur maximum admis du carburant dans le réservoir plein. A son autre extrémité, la canalisation débouche en un endroit situé en aval du dispositif d'étanchéité du guide pistolet présent dans le haut de la tubulure de remplissage. Il faut entendre ici le vocable "aval" comme signifiant le côté du dispositif d'étanchéité situé vers le réservoir.

La canalisation de respiration et de fixation du niveau maximum peut déboucher directement dans la partie haute du réservoir. Alternativement, elle peut aussi déboucher dans cette partie haute via un clapet à flotteur, différent du clapet assurant le dégazage et la mise à l'air. Dans ce dernier cas, la circulation des vapeurs se fait à travers le clapet ouvert et le flotteur est conçu pour fermer le passage lorsque le niveau maximum de liquide est atteint dans le réservoir.

Dans le cas particulier où la tubulure de remplissage est raccordée au réservoir dans une partie basse de celui-ci, la canalisation de respiration et de fixation du niveau maximum de carburant liquide prend généralement la forme d'un siphon disposé à l'intérieur du réservoir. Dans cette situation, il est intéressant que cette canalisation soit scindée en deux parties, la première située dans le réservoir et la deuxième dans la tubulure de remplissage. Les deux parties se rejoignent à l'endroit du raccordement de la tubulure de remplissage avec le réservoir, encore appelé goulot. De manière particulièrement intéressante, un clapet antiretour est disposé dans le goulot et interdit les renvois de liquide dans la tubulure de remplissage. Ce clapet antiretour comprend des embases pour la fixation des deux parties de la canalisation de respiration et de fixation du niveau maximum. Avantageusement, la présence d'un tel clapet antiretour maintient immobile la canalisation à l'intérieur de la tubulure et du réservoir.

De préférence, le clapet du système de sécurité pour réservoir à carburant liquide selon l'invention, qui assure le dégazage et la mise à l'air, est un clapet à flotteur, c'est-à-dire un dispositif mobile coulissant dans un fût, qui suit le niveau de carburant présent dans le réservoir dès que ce niveau atteint une position de repos basse du flotteur dans le fût. Un tel clapet est un dispositif qui, en collaboration avec les autres éléments du système de sécurité, contribue à maintenir le réservoir sur lequel il est monté dans un état sûr pour l'utilisateur, c'est-à-dire à l'abri de toute situation hasardeuse, en particulier les risques d'explosion, d'implosion, de combustion ou de pollution quelconques, tout en maintenant l'environnement extérieur à l'abri de toute fuite de liquide ou émanation de gaz indésirables.

Il est avantageux que ce clapet à flotteur reste ouvert, en situation normale, pendant l'opération de remplissage du réservoir comme pendant les périodes d'usage normal de celui-ci, lorsque ce réservoir est fermé et que le carburant est soit consommé, soit abandonné dans le réservoir pour une certaine période de stockage.

La ligne de flottaison du flotteur d'un tel clapet est réglée pour que le clapet ne soit fermé qu'en deux circonstances. La première de celle-ci se manifeste lorsque le réservoir est incliné au-delà d'une limite prédéterminée, voire est complètement retourné. La deuxième prévaut pendant un mouvement transitoire du carburant dont l'ampleur dépasse une certaine valeur prédéterminée.

Un exemple de clapet à flotteur qui convient bien pour le système selon l'invention est celui qui comporte une double chambre, l'une comprenant un flotteur et l'autre un volume faisant office de capacité capable de piéger du carburant liquide entraîné par des vapeurs s'échappant du clapet. Un tel clapet est décrit dans la demande de brevet français N° 2000.09286.

Dans cette variante, le système de sécurité décrit ci-dessus est adapté aux divers types de situation géographique et/ou de pistolets rencontrés dans les stations-service qui distribuent le carburant.

Il est bien adapté, par exemple, à la pratique nord-américaine selon laquelle les vapeurs de carburant sont récupérées dans un canister de grand volume rempli de matière absorbant les hydrocarbures.

Il est aussi particulièrement bien adapté à l'enlèvement et la récupération des vapeurs de carburant par les pistolets dits "actifs", c'est-à-dire qui aspirent eux-mêmes les vapeurs pour les stocker et/ou les récupérer en dehors des véhicules comportant le système de sécurité. La canalisation de respiration des vapeurs et de fixation du niveau maximum possède de préférence un diamètre suffisant pour permettre l'aspiration totale des gaz présents dans le réservoir par le pistolet dans ce cas. De tels systèmes peuvent se rencontrer principalement en Europe.

Le dispositif d'étanchéité conforme au système de sécurité selon l'invention peut être réalisé en tout matériau susceptible d'assurer une bonne fonction d'étanchéité entre le réservoir et l'atmosphère extérieure, y compris lorsqu'il est traversé par le bec d'un pistolet à carburant. Le terme étanchéité s'entend ici comme acceptant une fuite légère, du même ordre de grandeur que celle décrite *supra* dans la situation où le pistolet est introduit dans le guide.

Une réalisation particulière du système de sécurité conforme à l'invention qui a donné de bons résultats est celle où le dispositif d'étanchéité comporte un joint annulaire. De préférence, ce joint annulaire comprend au moins une lèvre en matériau élastomère se repliant sur la surface extérieure du tuyau du bec du pistolet. Un dispositif à deux lèvres annulaires a donné de bons résultats.

Une variante préférée de la réalisation particulière du système de sécurité qui précède est celle dans laquelle le dispositif d'étanchéité comprend en outre, en aval de la lèvre annulaire, un obturateur qui peut s'ouvrir sous l'effet de la pression de contact de l'extrémité du pistolet.

Un mode de réalisation possible de l'obturateur est une pièce circulaire aplatie en matériau élastomère, fendue en étoile à partir de son centre en un certain nombre de rayons délimitant des lamelles en forme de secteur circulaire assurant néanmoins l'étanchéité aux gaz lorsqu'elles sont en position fermée de repos, l'une contre l'autre. Un obturateur à 4 lamelles en quartiers a donné d'excellents résultats. Le terme "étanchéité" a ici encore la même signification que précédemment.

L'obturateur peut être solidaire du système d'étanchéité de façon à former une seule pièce comprenant la lèvre et l'obturateur. Il peut aussi constituer un organe coopérant avec la lèvre du système d'étanchéité mais indépendant de celle-ci. Un exemple possible d'un tel obturateur est un volet métallique ou en matière plastique rigide, semblable aux obturateurs connus, maintenu en position fermée par un ressort et dont l'ouverture est commandée par une pression exercée sur sa surface par l'extrémité du pistolet. Par le vocable "matière plastique rigide", on entend désigner ici une matière plastique qui n'est pas élastique.

Selon l'invention, ce système comprend en outre une soupape de sécurité qui ne peut s'ouvrir que vers l'atmosphère extérieure, en cas de surpression exagérée dans le réservoir. Cette soupape de sécurité met en communication l'intérieur de la tubulure de remplissage avec l'atmosphère extérieure au réservoir, en créant un passage permettant l'échappement de liquide et/ou de gaz de l'intérieur de la tubulure vers cette atmosphère extérieure, dans le voisinage du pistolet.

Cette soupape a pour fonction d'empêcher l'éclatement du réservoir en cas de situations anormales extrêmes telles que les montées en température rapides et élevées, en cas d'incendie ou d'explosion par exemple, ainsi qu'en cas de défaillance du système de déclenchement automatique du pistolet.

La soupape de sécurité peut être réalisée selon tout moyen approprié. Un moyen qui convient bien est celui d'une lèvre annulaire en matériau élastomère qui prolonge le dispositif d'étanchéité vers l'amont, du côté de l'orifice d'entrée de la tubulure.

Avantageusement, la lèvre annulaire a une de ses extrémités qui est solidaire du dispositif d'étanchéité et l'autre qui s'appuie à force élastique sur un élément rigide bordant le passage. Le vocable "rigide" a le même sens que celui déjà explicité plus haut. En position ouverte, la lèvre découvre un orifice qui permet l'écoulement du liquide et/ou du gaz dans une direction initiale perpendiculaire à l'axe du pistolet distributeur.

La soupape de sécurité peut aussi, alternativement, être constituée d'un clapet antiretour indépendant du système d'étanchéité et situé dans le guide du pistolet, à proximité de ce dernier. Un exemple d'un tel clapet est un clapet à membrane en forme de parapluie qui est disposé dans un orifice pratiqué dans le guide, au voisinage du pistolet.

Dans un autre mode de réalisation intéressant du système de sécurité selon l'invention, que l'on peut combiner avec ceux déjà décrits est de réaliser la canalisation de respiration et de fixation de niveau en matériau conducteur de l'électricité et de la relier par un conducteur électrique à une masse métallique, par exemple celle d'un véhicule sur lequel est monté le réservoir. Selon ce mode de réalisation, la canalisation peut être réalisée totalement en matériau conducteur de l'électricité. Elle peut aussi ne comporter qu'une couche superficielle externe en un matériau conducteur. Un exemple de matériau conducteur qui convient est une matière plastique chargée de noir de carbone.

Une première variante du système selon l'invention, que l'on peut combiner avec tous les modes de réalisation décrits *supra* est bien adaptée à des pistolets munis de dispositifs d'aspiration des vapeurs de carburant, encore appelés pistolets "actifs". Dans cette première variante, une sortie du clapet est reliée, d'une part, à un canister rempli de matière absorbant les vapeurs de carburant et une canalisation de dégazage des vapeurs relie, d'autre part, une deuxième sortie du clapet à la partie supérieure de la tubulure de remplissage, en amont du dispositif d'étanchéité du guide à un endroit proche du dispositif d'aspiration du pistolet. Cette canalisation de dégazage est capable d'évacuer la plus grande partie (et de préférence, la totalité) du volume des gaz qui s'échappent du réservoir lors d'une opération de remplissage de ce dernier.

Ce système convient bien dans le cas où le réservoir est destiné au stockage de carburants à volatilité élevée. En particulier, il est avantageux lorsque le pistolet actif est du type muni d'un dispositif d'aspiration à manchon capable d'entourer l'orifice supérieur de la tubulure par lequel s'effectue le remplissage. Ce type de pistolet peut se rencontrer plus souvent en Europe qu'en Amérique du Nord.

Par carburant à volatilité élevée, on entend désigner des carburants légers tels que les essences de diverses qualités, à l'exclusion des huiles plus lourdes telles que le gasoil ou autre carburant pour moteurs Diesel.

Les sorties du clapet dont il est question sont, d'une part, la sortie des gaz du circuit de mise à l'air durant les périodes de fonctionnement normal et, d'autre part, la sortie des gaz du circuit de dégazage lors du remplissage. Cette dernière peut, par exemple être située à la sortie des gaz de la capacité piégeant les entraînements de carburant liquide, lorsqu'une telle capacité est installée dans le clapet utilisé.

L'expression "capable d'évacuer la plus grande partie des gaz et de préférence la totalité" a le même sens que celle explicitée plus haut pour la canalisation de respiration.

Dans le cas de pistolets démunis de système d'aspiration des vapeurs de carburant, une deuxième variante du système comprend un clapet qui est, comme pour la première variante, relié à un canister rempli de matière absorbant les vapeurs de carburant. Mais dans le cas particulier de cette deuxième variante, le clapet n'est pas pourvu d'une deuxième sortie et le volume du canister, la taille du clapet et le diamètre de la canalisation reliant le clapet au canister sont dimensionnés pour que ce dernier soit capable de retenir à lui seul la plus grande partie du volume des gaz qui s'échappent du réservoir lors de l'opération de remplissage. Dans cette situation, en plus de l'absorption des gaz lors de la mise à l'air du réservoir en utilisation normale, le canister assure aussi l'absorption des gaz quittant le réservoir au moment du remplissage. Ce système convient bien dans le cas où le réservoir est destiné au stockage de carburants à volatilité élevée. Cette situation peut se rencontrer principalement en Amérique du Nord.

Une troisième variante du système selon l'invention, bien adaptée aux pistolets démunis de systèmes d'aspiration des vapeurs de carburant, comprend un clapet dont la sortie débouche dans un canister rempli de matière absorbant les vapeurs de carburant. Ce système peut convenir dans le cas où le réservoir est destiné au stockage de carburants à volatilité élevée. Dans ce cas, la sortie du clapet est généralement unique et peut être raccordée à un dispositif d'absorption des vapeurs supplémentaire, par exemple un deuxième canister, disposé en série avec le premier et dont la fonction est de retenir les vapeurs de carburant chaque fois que le premier canister est saturé. Ce système peut se rencontrer tant en Europe qu'en Amérique du Nord.

Dans le cas de carburants à faible volatilité et de pistolets démunis de systèmes d'aspiration des vapeurs de carburant, une quatrième variante, alternative à la troisième variante, consiste en ce que la sortie du clapet débouche à l'atmosphère, sans passer par un canister. Cette variante est plus particulièrement adaptée aux systèmes européens. La sortie vers l'atmosphère peut être directe sur le clapet même. Elle peut aussi se faire au travers d'un dispositif empêchant l'introduction de particules solides dans le réservoir ou par tout autre dispositif approprié tel qu'une canalisation ou un circuit d'évacuation quelconque.

Selon une cinquième variante du système selon l'invention, conforme aux troisième et quatrième variantes, une canalisation de dégazage des vapeurs relie une deuxième sortie du clapet à la partie supérieure de la tubulure de remplissage, en amont du dispositif d'étanchéité du guide, à un endroit proche d'un dispositif d'aspiration du pistolet, et est capable d'évacuer la plus grande partie du volume des gaz qui s'échappent du réservoir lors d'une opération de remplissage de ce dernier.

Les significations des termes "étanchéité", "amont" et de l'expression "capable d'évacuer la plus grande partie du volume des gaz qui s'échappent du réservoir" sont encore ici les mêmes que celles explicitées plus haut.

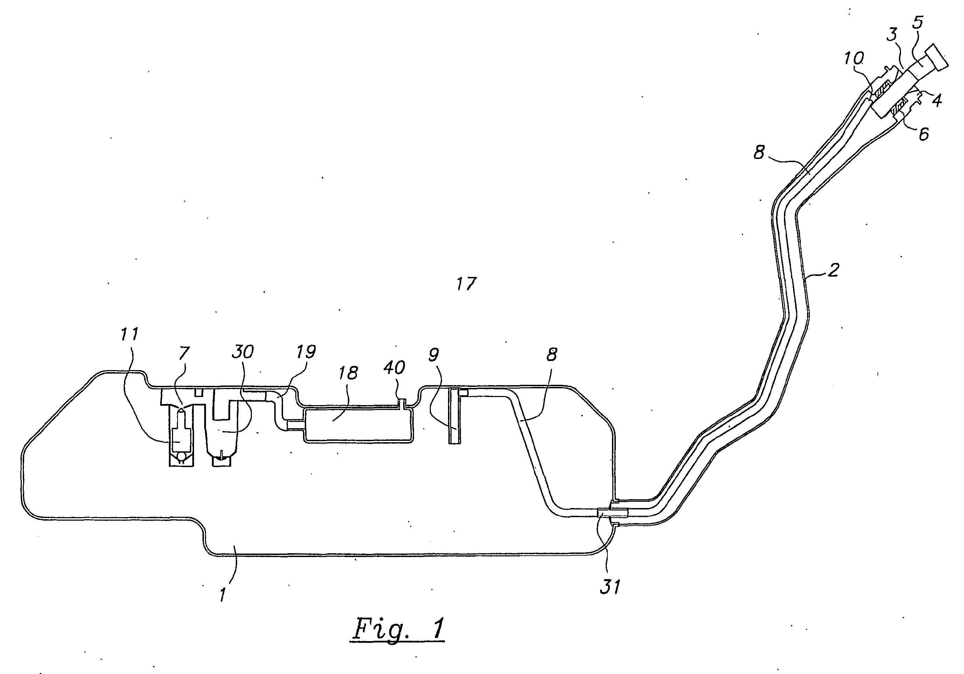

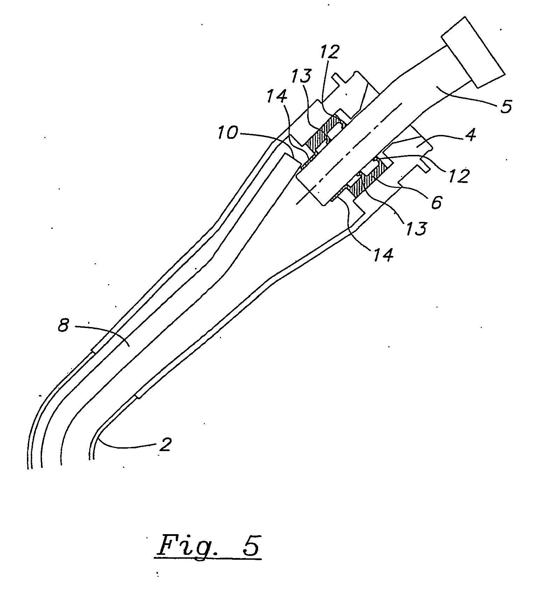

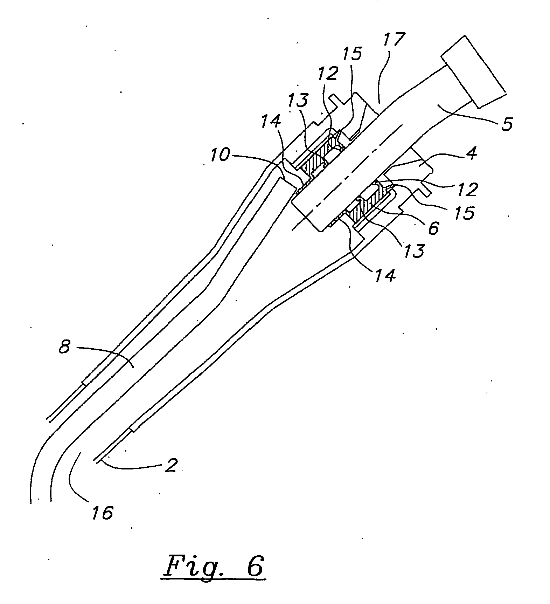

Les figures 1 à 6 qui suivent ont pour but d'illustrer l'invention, sans en limiter en aucune façon sa portée.

La figure 1 illustre schématiquement un système de sécurité pour réservoir à carburant liquide dans une version convenant pour les pays européens.

Dans cette figure, un réservoir (1) en polyéthylène haute densité (PEHD), contenant du carburant liquide (essence sans plomb d'indice d'octane 95) était muni d'une tubulure de remplissage (2) en PEHD, d'un clapet de dégazage et de mise à l'air (7), comportant un flotteur (11) et une capacité de piégeage de liquide (30), relié par la canalisation (19) en PEHD à un canister (18) rempli de charbon actif et par une canalisation (40) à l'atmosphère extérieure (17). Une canalisation (8) de respiration des vapeurs et de fixation du niveau maximum reliait le ciel du réservoir (1) à une zone (10) de la tubulure (2) située immédiatement en aval d'un dispositif d'étanchéité (6). Ce dispositif d'étanchéité (6) comportait un joint souple à deux lèvres. La canalisation (8) était située entièrement à l'intérieur du volume de la tubulure (2) et du réservoir (1) et plongeait dans le ciel du réservoir (1) par une partie verticale (9) jusqu'à un niveau qui fixait le niveau maximum de carburant liquide admis dans le réservoir. La canalisation (8) était partagée en deux parties séparées par un clapet anti-retour (31) disposé dans le goulot du réservoir (1), à l'endroit de raccordement de la tubulure (2) et interdisait l'échappement de liquide hors du réservoir (1), notamment le vidage de ce dernier en cas de rupture du raccord réservoir-tubulure de remplissage. La figure 1 montre aussi un guide (4) pour pistolet distributeur de station-service (5), engagé dans le haut de la tubulure (2) et traversant le dispositif d'étanchéité (6) de manière telle que l'extrémité du bec distributeur soit situé en aval de celui-ci.

Le fonctionnement du système représenté à la figure 1 se détaille comme suit. Partant de la situation initiale dans laquelle le réservoir (1) était fermé par un bouchon d'obturation (non représenté) de la tubulure de remplissage (2) et le réservoir en situation normale de repos, aucune quantité de carburant n'étant prélevée, on a ouvert le bouchon obturant l'entrée (3) de la tubulure de remplissage (2), afin d'effectuer une opération de ravitaillement en essence.

On a introduit alors le pistolet (5) dans l'entrée (3) du guide (4) et on l'a forcé mécaniquement à pénétrer dans les joints du dispositif d'étanchéité (6). Ce pistolet (5) portait à l'extrémité de son bec, introduit dans la tubulure (2) en aval du joint du dispositif d'étanchéité (6), un orifice d'entrée servant de capteur de déclenchement de la coupure de l'arrivée de carburant. Grâce aux joints du dispositif d'étanchéité (6), l'air ambiant ne pouvait plus accéder à l'orifice du système de déclenchement du pistolet (5).

La poignée de commande d'ouverture du pistolet (5) a été ensuite manoeuvrée par l'utilisateur et de l'essence a commencé à être délivrée dans le réservoir (1). De manière à ce que le pistolet (5) ne déclenche pas et ne provoque pas l'arrêt de l'arrivée d'essence, de l'air et/ou des vapeurs d'essence pouvaient entrer librement par le haut de la canalisation (8) de respiration des vapeurs et de fixation du niveau maximum dans la zone (10) en aval du dispositif d'étanchéité (6), la partie (9) de canalisation (8) plongeant dans le haut du réservoir (1), la poche gazeuse surmontant le niveau de carburant liquide dans le réservoir (1), le clapet (7), la canalisation de dégazage (40) et l'atmosphère extérieure au réservoir (1) proche de l'entrée (3).

Dans le même temps, le volume d'essence introduit par la tubulure (2) a remplacé le volume de gaz présent dans la poche gazeuse du réservoir (1). Ce volume de gaz s'est échappé comme expliqué ci-dessus par le clapet (7) et la canalisation de dégazage (40).

Au départ de la canalisation (41) du clapet (7), se trouvait un dispositif venturi qui a introduit une certaine perte de charge dans la liaison du clapet (7) avec le canister (18), de manière à ne laisser passer vers le canister qu'une petite quantité de gaz, nettement moins importante que celle qui circule dans les canalisations (8) et (40). Cette disposition a permis de ne pas saturer inutilement le charbon actif remplissant le canister (18) pendant l'opération de remplissage.

Pendant le remplissage, la surpression régnant dans le réservoir (1) par rapport à la pression atmosphérique est restée très faible et uniquement déterminée par les caractéristiques de faible perte de charge des passages ouverts du clapet (7) et de la canalisation de dégazage (40).

Le niveau d'essence dans le réservoir s'est élevé et a fini par affleurer à l'orifice de la canalisation (9). A ce moment, le pistolet (5) n'a plus reçu d'air ou de gaz en provenance de la poche surmontant le niveau d'essence dans le réservoir (1) et l'orifice d'entrée du bec du pistolet (5) a été soumis à une légère dépression, ce qui a provoqué par le fait même l'activation du dispositif automatique de ce pistolet (5) sensible à la dépression et le déclenchement de la coupure d'arrivée d'essence.

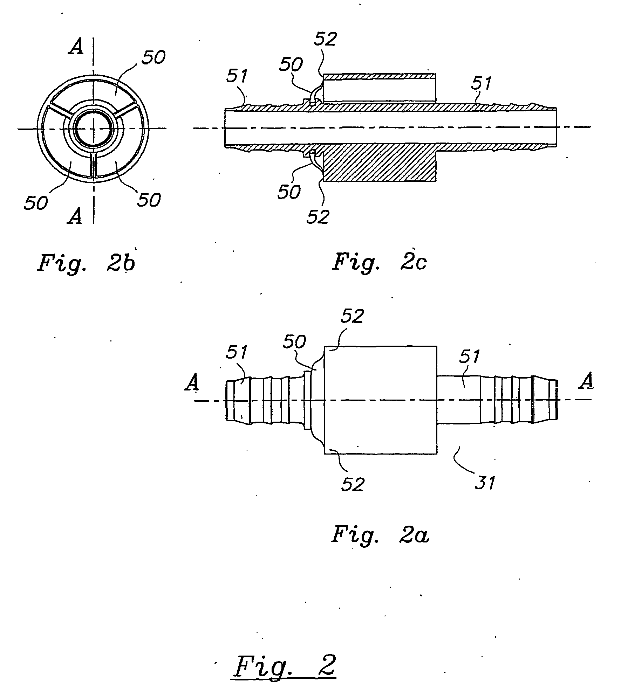

La figure 2 illustré en détail un clapet anti-retour (31) et se compose de trois sous-figures 2a, 2b et 2c. La sous-figure 2a est une vue en plan de ce clapet. La sous-figure 2b est une vue de profil et la sous-figure 2c une vue en coupe selon l'axe AA. On distingue une lèvre annulaire (50) en matériau souple flexible dont une extrémité était solidaire d'un tube (51) aux extrémités duquel sont venus se raccorder les deux parties de la canalisation (8). Cette lèvre (50) pouvait se déformer sous la pression d'un liquide provenant de la tubulure (2) de manière à laisser entrer ce liquide dans le réservoir (1). Par contre, le liquide présent dans le réservoir (1) était empêché de retourner dans la tubulure (2), car il exerçait une pression sur la lèvre (50) et la maintenait pressée sur l'embase (52) du clapet anti-retour (31).

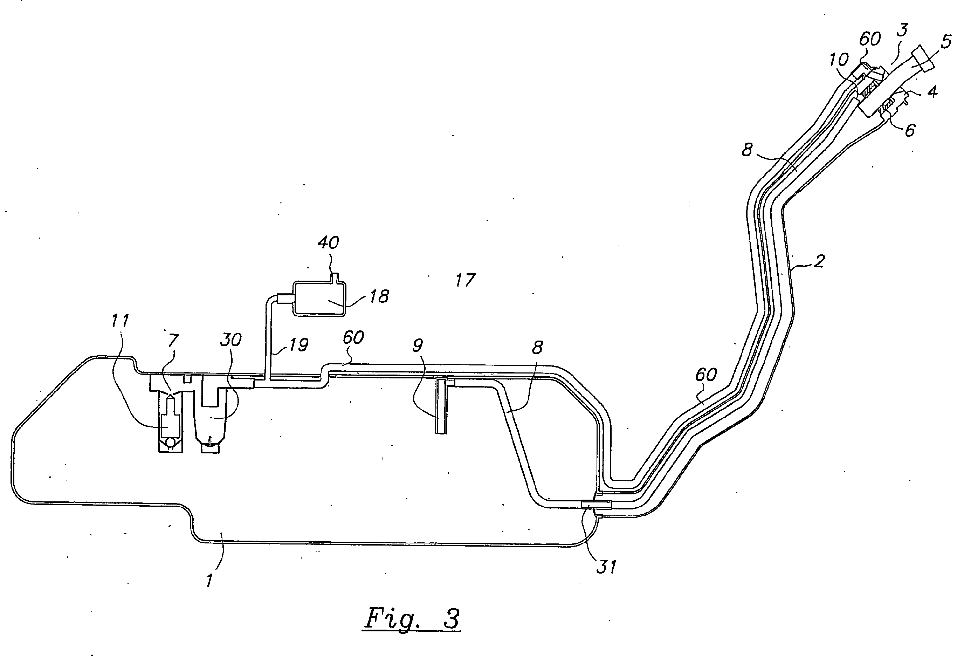

La figure 3 illustre une variante de la figure 1, c'est-à-dire un système de sécurité pour réservoir à carburant liquide dans une version convenant pour les pays européens. Dans cette figure, un clapet de dégazage et de mise à l'air (7) comportant une capacité de piégeage de liquide (30), était relié par la canalisation (19) à un canister (18) rempli de charbon actif disposé à l'extérieur du réservoir (1) et par une canalisation de dégazage (60) à l'orifice supérieur (3) de la tubulure de remplissage (2). La canalisation (60) assurait le dégazage en période de remplissage du réservoir (1).

Le clapet (7) étant resté ouvert, la très légère surpression présente dans le réservoir pendant le remplissage s'est équilibrée avec la pression atmosphérique via la canalisation de dégazage (60) et la sortie (3). Après fermeture du bouchon d'obturation de l'orifice de la tubulure (2), l'équilibrage de pression dans le réservoir s'est poursuivie par la canalisation (19) et le canister (18).

Pendant le remplissage, les gaz sortant à l'atmosphère à l'entrée (3) de la tubulure ont été aspirés au moyen d'un système actif comportant un manchon (non représenté) entourant le haut du pistolet (5) et l'entrée (3) et raccordé à une pompe d'aspiration de la station-service où les gaz ont été récupérés.

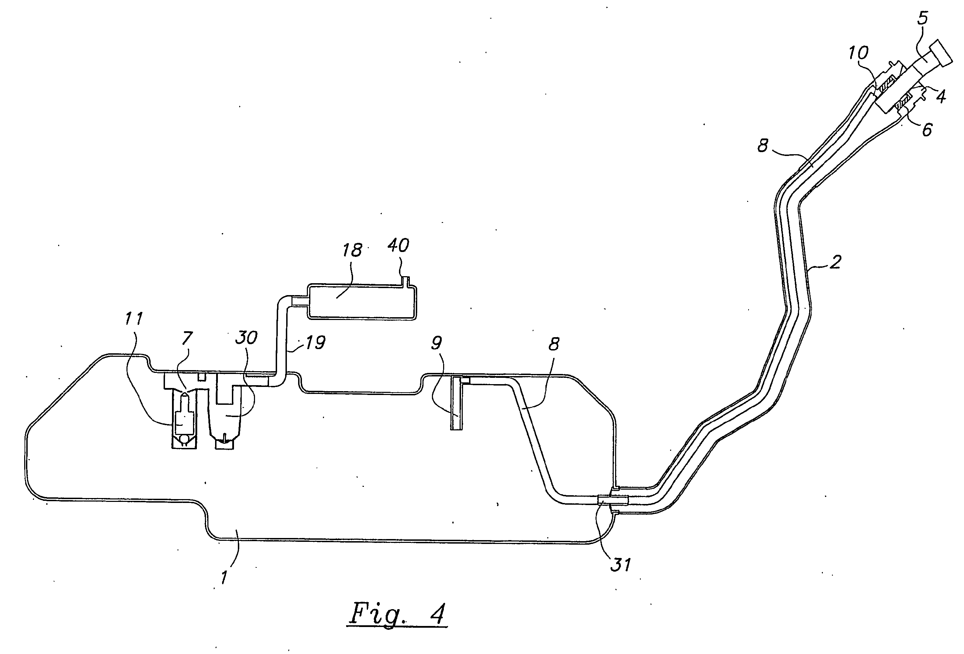

La figure 4 décrit schématiquement un système de sécurité pour réservoir à carburant liquide dans une version convenant pour l'Amérique du Nord.

Dans cette figure, un réservoir (1) en PEHD, contenant du carburant liquide (essence sans plomb d'indice d'octane 95) était muni d'une tubulure de remplissage (2) en PEHD, d'un clapet de dégazage et de mise à l'air (7), comportant un clapet à flotteur (11) et une capacité de piégeage de liquide (30), relié par la canalisation (19) à un canister de grande dimension (18) rempli de charbon actif, externe au réservoir (1). Une canalisation (8) de respiration des vapeurs et de fixation du niveau maximum, en PEHD, relie le ciel du réservoir (1) à une zone (10) de la tubulure (2) située immédiatement en aval d'un dispositif d'étanchéité (6). Ce dispositif d'étanchéité (6) comportait un joint souple à deux lèvres. La canalisation (8) de respiration des vapeurs et de fixation du niveau maximum était située entièrement à l'intérieur du volume de la tubulure (2) et du réservoir (1) et plongeait dans le ciel du réservoir (1) par une partie verticale (9) jusqu'à un niveau qui fixait le niveau maximum de carburant liquide admis dans le réservoir. La canalisation (8) était partagée en deux parties séparées par un clapet anti-retour (31) disposé dans le goulot du réservoir (1), à l'endroit de raccordement de la tubulure (2) et interdisait l'échappement de liquide hors du réservoir (1). La figure 4 montre aussi un pistolet de station-service (5) distribuant du carburant, engagé dans le haut de la tubulure (2) et traversant le dispositif d'étanchéité (6) de manière telle que l'extrémité du bec distributeur soit situé en aval du joint d'étanchéité (6).

Le fonctionnement du système de sécurité de la figure 4 se détaille comme suit. Partant de la situation initiale dans laquelle le réservoir (1) était fermé par un bouchon d'obturation de la tubulure de remplissage (2) et le réservoir en situation normale de repos, aucune quantité de carburant n'étant prélevée, on a ouvert le bouchon obturant l'entrée (3) de la tubulure de remplissage (2), afin d'effectuer une opération de ravitaillement en essence.

On a introduit alors le pistolet (5) dans l'entrée (3) de la tubulure (2) et on l'a forcé mécaniquement à pénétrer dans les joints du dispositif d'étanchéité (6). Ce pistolet (5) portait à l'extrémité de son bec introduit dans la tubulure (2) en aval du joint du dispositif d'étanchéité (6), un orifice d'entrée servant de capteur de déclenchement de la coupure de l'arrivée de carburant. Grâce aux joints du dispositif d'étanchéité (6), l'air ambiant ne pouvait plus accéder à l'orifice du système de déclenchement du pistolet (5).

La poignée de commande d'ouverture du pistolet (5) a été ensuite manoeuvrée par l'utilisateur et de l'essence a commencé à être délivrée dans le réservoir (1). De manière à ce que le pistolet (5) ne déclenche pas et ne provoque pas l'arrêt de l'arrivée d'essence, de l'air et/ou des vapeurs d'essence pouvaient entrer librement par le haut de la canalisation (8) dans la zone (10) en aval du dispositif d'étanchéité (6), la partie (9) de canalisation (8) plongeant dans le haut du réservoir (1), la poche gazeuse surmontant le niveau de carburant liquide dans le réservoir (1), le clapet (7), la canalisation (19), le canister (18) et la sortie à l'atmosphère (40).

Dans le même temps, le volume d'essence introduit par la tubulure (2) a remplacé le volume de gaz présent dans la poche gazeuse du réservoir (1). Ce volume de gaz s'est échappé comme expliqué ci-dessus par le clapet (7) et le canister (18).

Pendant le remplissage, la surpression régnant dans le réservoir (1) par rapport à la pression atmosphérique est restée très faible et uniquement déterminée par les caractéristiques de faible perte de charge des passages ouverts du clapet (7), de la canalisation (19) et du canister (18).

Les vapeurs provenant de la poche gazeuse surmontant le niveau de carburant liquide dans le réservoir (1) ont été évacuées par la canalisation de respiration (19) et absorbées dans le canister de grande capacité (18).

Le niveau d'essence dans le réservoir s'est élevé et a fini par affleurer à l'orifice de la canalisation de respiration (9). A ce moment, le pistolet (5) n'a plus reçu d'air ou de gaz en provenance de la poche surmontant le niveau d'essence dans le réservoir (1) et l'orifice d'entrée du bec du pistolet (5) a été soumis à une légère dépression, ce qui a provoqué par le fait même l'activation du dispositif automatique de ce pistolet (5) sensible à la dépression et a entraîné le déclenchement de la coupure d'arrivée d'essence.

Le clapet (7) étant resté ouvert, la très légère surpression présente dans le réservoir pendant le remplissage s'est équilibrée avec la pression atmosphérique via la canalisation (19) et le canister (18).

La figure 5 illustre en détail le haut d'une tubulure de remplissage (2) conforme aux figures 1 et 4. On y distingue le dispositif d'étanchéité (6) muni de son joint sous la forme de deux lèvres souples (12, 13) et complété par l'obturateur (14).

La figure 6 illustre une variante de la figure précédente, dans laquelle une soupape de sécurité (15) permet l'ouverture à l'atmosphère (17) en cas de surpression exagérée accidentelle lors du ravitaillement en carburant dans le réservoir (1).

## Revendications

1. Système de sécurité pour réservoir à carburant liquide (1), comprenant :
a) une tubulure de remplissage (2) aboutissant dans un réservoir (1), l'orifice d'entrée (3) de la tubulure (2) comprenant un guide (4) pour pistolet (5) muni d'un dispositif d'étanchéité (6) vis-à-vis de l'environnement extérieur,
b) un clapet (7), monté sur le réservoir (1), capable d'assurer le dégazage du réservoir (1) lors d'une opération de remplissage en carburant, de même que la mise à l'air durant les périodes d'usage normal du réservoir,
c) une canalisation (8) de respiration des vapeurs et de fixation du niveau maximum du carburant liquide dans le réservoir (1),
système dans lequel canalisation (8) débouche à une de ses extrémités (9) dans la partie haute du réservoir (1), relie cette partie haute à la partie supérieure de la tubulure de remplissage (2) et débouche à son autre extrémité (10), en un endroit situé en aval du dispositif d'étanchéité(6), du côté du réservoir (1), et la canalisation (8) est située complètement à l'intérieur du réservoir (1) et de la tubulure de remplissage (2), le système étant **caractérisé en ce qu'**il comprend en outre une soupape de sécurité (15) qui ne peut s'ouvrir que vers l'atmosphère extérieure (17) en cas de surpression exagérée dans le réservoir et qui met en communication l'intérieur (16) de la tubulure de remplissage avec l'atmosphère extérieure (17), dans le voisinage du pistolet (1).

2. Système selon la revendication précédente, **caractérisé en ce que** la canalisation (8) débouche dans la partie haute du réservoir (1) via un clapet à flotteur.

3. Système selon une quelconque des revendications précédentes, **caractérisé en ce que** le clapet (7) est un clapet à flotteur (11) normalement ouvert pendant le remplissage du réservoir (1) et pendant les périodes d'usage normal du réservoir (1) et **en ce que** la ligne de flottaison du flotteur (11) est réglée pour que le clapet (7) ne soit fermé qu'en deux circonstances, à savoir lorsque le réservoir (1) est incliné au-delà d'une limite prédéterminée, voire complètement retourné et pendant un mouvement transitoire du carburant dont l'ampleur dépasse une valeur prédéterminée.

4. Système selon une quelconque des revendications précédentes, **caractérisé en ce que** le dispositif d'étanchéité (6) comporte un joint annulaire comprenant au moins une lèvre circulaire (12) en matériau élastomère souple destinée à s'appuyer sur la circonférence du bec du pistolet (5).

5. Système selon la revendication précédente, **caractérisé en ce que** le dispositif d'étanchéité (6) comprend en outre, en aval de la lèvre (12), un obturateur (14) qui peut s'ouvrir sous l'effet de la pression de contact de l'extrémité du bec du pistolet (5).

6. Système selon l'une quelconque des revendications précédentes, **caractérisé en ce que** la soupape de sécurité (15) est une lèvre annulaire en matériau élastomère qui prolonge le dispositif d'étanchéité (6) vers l'amont, du côté de l'orifice d'entrée (3) de la tubulure (2).

7. Système selon l'une quelconque des revendications 1 à 5, **caractérisé en ce que** la soupape de sécurité (15) est un clapet anti-retour indépendant du système d'étanchéité (6) et situé dans le guide (4) du pistolet (1), à proximité de ce dernier.

8. Système selon l'une quelconque des revendications précédentes, **caractérisé en ce qu'**au moins une couche superficielle externe de la canalisation (8) est conductrice de l'électricité et que cette canalisation est reliée par un conducteur électrique à une masse métallique d'un véhicule sur lequel est monté le réservoir (1).

9. Système selon l'une quelconque des revendications précédentes, adapté aux pistolets (5) démunis de systèmes d'aspiration des vapeurs de carburant, **caractérisé en ce que** le clapet (7) est relié à un canister (18) rempli de matière absorbant les vapeurs de carburant et **en ce que** le volume du canister (18), la taille du clapet (7) et le diamètre de la canalisation (19) reliant le clapet au canister (18) sont dimensionnés pour être capables d'évacuer la plus grande partie du volume des gaz qui s'échappent du réservoir (1) lors de l'opération de remplissage.

10. Système selon l'une quelconque des revendications 1 à 8, **caractérisé en ce que** la sortie du clapet (7) débouche à l'atmosphère extérieure (17), sans passer par un canister.

## Claims

1. Safety system for a liquid fuel tank (1), comprising:
a) a fill tube (2) terminating in a tank (1), the inlet orifice (3) of the tube (2) comprising a guide (4) for a nozzle (5) provided with a sealing device (6) for sealing against the external environment;
b) a valve (7), mounted on the tank (1), capable of degassing the tank (1) during an operation of filling with fuel, and also of venting during periods when the tank is in normal use,
c) a vapour breather pipe (8) that also fixes the maximum level of liquid fuel in the tank (1),
system in which the pipe (8) emerges at one of its ends (9) in the top of the tank (1), connects this top to the upper portion of the fill tube (2) and emerges at its other end (10), at a point located downstream of the sealing device (6), on the side facing the tank (1), and the pipe (8) is completely located inside both the tank (1) and the fill tube (2), the system being **characterized in that** it furthermore includes a safety valve (15) which can open only towards the external atmosphere (17) in the event of excessive overpressure in the tank and which brings the inside (16) of the fill tube into communication with the external atmosphere (17) in the vicinity of the nozzle (5).

2. System according to the preceding claim, **characterized in that** the pipe (8) emerges in the top of the tank (1) via a float valve.

3. System according to either of the preceding claims, **characterized in that** the valve (7) has a float (11), the said valve being normally open when filling the tank (1) and during the periods of normal use of the tank (1), and **in that** the float line of the float (11) is set so that the valve (7) is closed only in two circumstances, namely when the tank (1) is inclined beyond a predetermined limit, or even completely upside down, and during a transient movement of the fuel, the amplitude of which exceeds a predetermined value.

4. System according to any one of the preceding claims, **characterized in that** the sealing device (6) comprises an annular seal having at least one circular lip (12) made of a flexible elastomer and intended to bear on the circumference of the spout of the nozzle (5).

5. System according to the preceding claim, **characterized in that** the sealing device (6) furthermore includes, downstream of the lip (12), a stopper (14) that can open under the effect of the pressure caused by contact with the end of the spout of the nozzle (5).

6. System according to any one of the preceding claims, **characterized in that** the safety valve (15) is an annular lip made of elastomer that extends the sealing device (6) upstream, on the side facing the inlet orifice (3) of the tube (2).

7. System according to any one of the claims 1 to 5, **characterized in that** the safety valve (15) is a non-return valve independent of the sealing system (6) and located in the guide (4) for the nozzle (1), near the latter.

8. System according to any one of the preceding claims, **characterized in that** at least one external surface layer of the pipe (8) is electrically conductive and **in that** this pipe is connected via an electrical conductor to a metal earth of a vehicle on which the tank (1) is mounted.

9. System according to any one of the preceding claims, suited to nozzles (5) that are not provided with fuel vapour suction systems, **characterized in that** the valve (7) is connected to a canister (18) filled with a material that absorbs the fuel vapour and **in that** the volume of the canister (18), the size of the valve (7) and the diameter of the pipe (19) connecting the valve to the canister (18) are designed so as to be capable of evacuating most of the volume of gas escaping from the tank (1) during the filling operation.

10. System according to any one of Claims 1 to 8, **characterized in that** the outlet of the valve (7) emerges in the external atmosphere (17) without passing via a canister.

## Patentansprüche

1. Sicherheitssystem für Flüssigkraftstofftank (1) mit:
a) einem Füllrohr (2), das in einen Behälter (1) mündet, wobei die Eintrittsöffnung (3) des Rohres (2) eine Führung (4) für eine Pistole (5) aufweist, die gegenüber der Außenumgebung mit einer Dichtungsvorrichtung (6) versehen ist,
b) einem Ventil (7), das an dem Behälter (1) montiert und befähigt ist, ein Entgasen des Behälters (1) während eines Füllvorganges mit Kraftstoff, sowie ein Entlüften während der normalen Benützungsperioden des Behälters zu ermöglichen,
c) einer Leitung (8) zum Ansaugen von Dämpfen und zum Festlegen des maximalen Flüssigkraftstoffpegels in dem Behälter (1),
wobei bei diesem System die Leitung (8) an einem ihrer Enden (9) in einem oberen Teil des Behälters (1) ausmündet, diesen oberen Teil mit dem oberen Teil des Füllrohres (2) verbindet und an ihrem anderen Ende (10) an einer Stelle ausmündet, die bezüglich der Seite des Behälters (1) stromabwärts der Dichtungsvorrichtung (6) liegt, und wobei die Leitung (8) vollständig im Inneren des Behälters (1) und des Füllrohres (2) angeordnet ist, wobei das System **dadurch gekennzeichnet ist, daß** es außerdem ein Sicherheitsventil (15) aufweist, das sich im Falle eines übermäßigen Überdruckes in dem Behälter nur zur Außenatmosphäre (17) öffnet und das Innere (16) des Füllrohres mit der Außenatmosphäre (17) in der Nähe der Pistole (1) in Verbindung setzt.

2. System nach dem vorhergehenden Anspruch, **dadurch gekennzeichnet, daß** die Leitung (8) in den oberen Teil des Behälters (1) über ein Schwimmerventil ausmündet.

3. System nach einem der vorhergehenden Ansprüche, **dadurch gekennzeichnet, daß** das Ventil (7) und ein Schwimmerventil (11) normalerweise während des Füllens des Behälters (1) und während der normalen Benützungsperioden des Behälters (1) offen sind, und daß die Schwimmerlinie des Schwimmers (1) durch das Ventil (7) geregelt wird, das nur unter zwei Umständen geschlossen ist, nämlich, wenn der Behälter (1) über ein vorbestimmtes Grenzmaß geneigt oder vollständig gewendet ist, und während einer vorübergehenden Bewegung des Kraftstoffes, deren Amplitude einen vorbestimmten Wert überschreitet.

4. System nach einem der vorhergehenden Ansprüche, **dadurch gekennzeichnet, daß** die Dichtungsvorrichtung (6) eine ringförmige Dichtung aufweist, die zumindest eine kreisförmige Lippe (12) aus einem nachgiebigen Elastomermaterial hat, die dazu bestimmt ist, am Umfang der Pistolenmündung (5) anzugreifen.

5. System nach dem vorhergehenden Anspruch, **dadurch gekennzeichnet, daß** die Dichtungsvorrichtung (6) ferner stromabwärts der Lippe (12) einen Verschluß (14) aufweist, der sich unter der Wirkung des Kontaktdruckes am Ende der Pistole (5) öffnet.

6. System nach einem der vorhergehenden Ansprüche, **dadurch gekennzeichnet, daß** das Sicherheitsventil (15) eine ringförmige Lippe aus einem Elastomermaterial hat, welches die Dichtungsvorrichtung (6) stromaufwärts bezüglich der Seite der Eintrittsöffnung (3) des Rohres (2) verlängert.

7. System nach einem der Ansprüche 1 bis 5, **dadurch gekennzeichnet, daß** das Sicherheitsventil (15) ein Rückschlagventil ist, das von dem Dichtungssystem (6) unabhängig ist und in der Führung (4) der Pistole (1) in der Nähe der letzteren angeordnet ist.

8. System nach einem der vorhergehenden Ansprüche, **dadurch gekennzeichnet, daß** zumindest eine Oberflächenaußenschicht der Leitung (8) elektrisch leitend ist, und daß die Leitung über einen elektrischen Leiter mit einer Metallmasse eines Fahrzeuges verbunden ist, an welchem der Behälter (1) montiert ist.

9. System nach einem der vorhergehenden Ansprüche, das mit Pistolen (5) versehen ist, welche mit Kraftstoffdampf-Ansaugsystemen ausgestattet sind, **dadurch gekennzeichnet, daß** das Ventil (7) mit einem Kanister (8) verbunden ist, der mit einem Kraftstoffdämpfe absorbierenden Material gefüllt ist, und daß das Volumen des Kanisters (18), die Größe des Ventils (7) und der Durchmesser der Leitung (19), welche das Ventil mit dem Kanister (18) verbindet, so dimensioniert sind, daß sie befähigt sind, den größten Teil des Gasvolumens zu evakuieren, der aus dem Behälter (1) während des Füllvorganges austritt.

10. System nach einem der vorhergehenden Ansprüche 1 bis 8, **dadurch gekennzeichnet, daß** der Ausgang des Ventils (7) in die Außenatmosphäre (17) mündet, ohne den Kanister zu durchsetzen.
